# EUROPEAN PATENT APPLICATION

(11) **EP 1 829 938 A1**
(43) Date of publication of application: **05.09.2007**
(21) Application number: 05814658.0
(22) Date of filing: 06.12.2005
(51) Int. Cl.: C09D 11/00, B41J 2/01, B41M 5/00

(54) **ACTINIC RADIATION CURABLE MAGENTA INK COMPOSITION, ACTINIC RADIATION CURABLE INK JET RECORDING MAGENTA INK AND METHOD FOR IMAGE FORMATION AND INK JET RECORDING APPARATUS USING SAID INK, AND ACTINIC RADIATION CURABLE PRINTING MAGENTA INK**

(30) Priority: 07.12.2004 JP 2004353847
(71) Applicant: Konica Minolta Medical & Graphic, Inc., Tokyo 163-0512 (JP)
(72) Inventor: TAKABAYASHI, Toshiyuki, c/o Konica Minolta, Tokyo 1928505 (JP)
(74) Representative: Henkel, Feiler & Hänzel
(86) International application number: PCT/JP2005/022324
(87) International publication number: WO 2006/062071

(57) **Abstract**

An actinic radiation curable magenta ink composition containing a quinacridone series pigment, a dispersing agent, a photo-polymerizable compound and a photo-polymerization initiator, wherein a surface of a coated layer with the magenta ink composition on a porous medium exhibits a 60°-glossiness defined in JIS K 5600 in the range of 95 to 140, provided that the coated layer is formed by coating the magenta ink composition with a bar coater on the porous medium having a void ratio of 50 to 70% and a 60°-glossiness defined in JIS K 5600 of 30 or more, and then standing still for 30 minutes.

## Description

### FIELD OF THE INVENTION

The present invention relates to an actinic radiation curable magenta ink composition superior in the storage stability, an actinic radiation curable magenta ink for ink-jet recording and image forming method and an ink-jet recording apparatus using such the ink superior in the ejection stability and storage stability, and an actinic radiation curable magenta ink for printing work superior in the storage stability.

### TECHNICAL BACKGROUND

Recently, ink-jet recording system is widely applied for various fields of printing works such as photography, various kinds of printing, peculiar printing such as marking and color filter. Images equal with those by silver salt photography have been obtained by the use of a recording apparatus capable of ejecting and controlling fine dots of ink, inks improved in color reproducibility, durability and ejection suitability and exclusive paper considerably improved in the light absorption property, color formation of colorant, and surface glossiness.

However, the ink-jet system using the exclusive paper causes a problem such as that the recording medium is limited and the cost of the recording medium is high. Consequently, various trials are carried out for recording images on usual recoding medium other than the exclusive paper by the ink-jet system. In concrete, a phase variation ink-jet system using wax ink in solid state at room temperature, a solvent type ink-jet system using ink principally composed of rapid drying organic solvent and a UV ink-jet system in which ink was cross-linked by ultraviolet rays (being UV rays) after recording are applied.

Among them, the UV curable ink-jet system is recently noted since the system is relatively low in the odor and is capable of printing on a image on a medium having no rapid drying capability and ink absorbability, and UV curable ink for ink-jet system is disclosed. (Please refer to Patent Documents 1 to 6.)

As the colorant for the ink, pigment is frequently used in dispersed state from the viewpoint of fastness of image. The pigment is difficultly adsorbed with a dispersing agent in the ink for ink-jet curable by actinic radiation such as ultraviolet rays because of presence of a polar group derived from a polymerizable group. In the ink-jet ink, the dispersion of the pigment is more important matter compared with usual paint. When the dispersion is instable, the ejection of the ink becomes instable and a fatal problem for the ink-jet ink is posed since the ink-jet system is a recording system in which droplets are ejected at high speed from fine nozzles.

Hitherto, a solvent type ink is applied for gravure printing, in which a vehicle composed of resin dissolved in an ester type or ketone type is used. However, such the ink poses problems such as that atmosphere contamination, lowering in the working environment and dangerousness of fire caused by evaporation of the solvent. Elimination of solvent or changing to aqueous system has been tried as a countermeasure for such the problems and a part of them has been made practicable. Gravure printing utilizing an active energy ray curable material is proposed as the solvent free system. (Please refer to Patent Document 7.)
On the other hand, flexographic printing is widely applied in various fields of printing such as from a permeable web such as paper to an impermeable web such as plastic film since the printing plate of rubber or plastic can be easily prepared and the cost of printing is low. Hitherto, a solvent type flexographic ink using varnish prepared by dissolving resin in a solvent has been principally used in the flexographic printing. However, the use of a flexographic ink composed of an active energy ray curable composition without any solvent is increasing according to rising consciousness for environmental problems. As the active energy curable type resin composition, a mixture composed of various acrylate or methacrylate and a prepolymer such as urethane acrylate and polyester acrylate was used hitherto. (Please refer to Patent Document 8.) However, the dispersion of the pigment is also a problem as to such the printing ink. When the dispersion is instable, the characteristics of the ink are largely varied between prolonged storage and a problem of fluctuation of the color density of the printed matter is resulted. Moreover, the instable dispersion further causes problems such as blocking of fine lines on a printing cylinder for gravure printing or that of fine lines on anilox roller for flexographic printing.
Patent Document 1: Unexamined Japanese Patent Application Publication No. (hereinafter, referred to as JP-A) 6-200204
Patent Document 2: Japanese Translation of PCT International Application Publication No. 2000-504778
Patent Document 3: JP-A 2002-188025
Patent Document 4: JP-A 2002-60463
Patent Document 5: JP-A 2003-252979
Patent Document 6: JP-A 2003-321629
Patent Document 7: JP-A 6-220385
Patent Document 8: JP-A 2003-321636

### DISCLOSURE OF THE INVENTION

### PROBLEMS TO BE DISSOLVED BY THE INVENTION

The invention is carried out on the above background and an object of the invention is to provide an actinic radiation curable magenta ink composition superior in the storage stability, an actinic radiation curable magenta ink for ink-jet recording and image forming method and an ink-jet recording apparatus using such the ink superior in the ejection stability and storage stability, and an actinic radiation curable magenta ink for printing work superior in the storage stability.

### MEANS FOR SOLVING THE PROBLEMS

The object of the invention is attained by the following constitution.
1. An actinic radiation curable magenta ink composition comprising a quinacridone series pigment, a dispersing agent, a photo-polymerizable compound and a photo-polymerization initiator,
   wherein a surface of a coated layer with the magenta ink composition on a porous medium exhibits a 60°-glossiness defined in JIS K 5600 in the range of 95 to 140,
   provided that the coated layer is formed by coating the magenta ink composition with a bar coater on the porous medium having a void ratio of 50 to 70% and a 60°-glossiness defined in JIS K 5600 of 30 or more, and then standing still for 30 minutes.
2. The actinic radiation curable magenta ink composition described in above 1,
   wherein the quinacridone series pigment has an average particle diameter of 0.090 to 0.200 µm.
3. The actinic radiation curable magenta ink composition described in above 1,
   wherein an amine value is larger than an acid value in the quinacridone series pigment, and further an acid value is larger than an amine value in the dispersing agent.
4. The actinic radiation curable magenta ink composition described in above 1,
   wherein a compound having an oxirane group is contained as the photo-polymerizable compound.
5. The actinic radiation curable magenta ink composition described in above 1,
   wherein 20 to 95% by weight of a compound having an oxetane ring, 5 to 80% by weight of a compound having an oxirane group, and 0 to 40% by weight of a vinyl ether compound are contained as the photo-polymerizable compound.
6. The actinic radiation curable magenta ink composition described in above 1,
   wherein the actinic radiation curable magenta ink composition is used as an ink-jet ink.
7. The actinic radiation curable magenta ink composition described in above 1,
   wherein the actinic radiation curable magenta ink composition is used as a flexographic printing ink.
8. An actinic radiation curable ink-jet recording magenta ink comprising a quinacridone series pigment, a dispersing agent, a photo-polymerizable compound, and a photo-polymerization initiator,
   wherein a surface of a coated layer with the magenta ink on a porous medium exhibits a 60°-glossiness defined in JIS K 5600 in the range of 95 to 140,
   provided that the coated layer is formed by coating the magenta ink with a bar coater on the porous medium having a void ratio of 50 to 70% and a 60°-glossiness defined in JIS K 5600 of 30 or more, and then standing still for 30 minutes.
9. The actinic radiation curable ink-jet recording magenta ink described in above 8,
   wherein the quinacridone series pigment has an average particle diameter of 0.090 to 0.200 µm.
10. The actinic radiation curable ink-jet recording magenta ink described in above 8,
   wherein an amine value is larger than an acid value in the quinacridone series pigment, and an acid value is larger than an amine value in the dispersing agent.
11. The actinic radiation curable ink-jet recording magenta ink described in above 8,
   wherein a compound having an oxirane group is contained as the photo-polymerizable compound.
12. The actinic radiation curable ink-jet recording magenta ink described in above 8,
   wherein 20 to 95% by weight of a compound having an oxetane ring, 5 to 80% by weight of a compound having an oxirane group, and 0 to 40% by weight of a vinyl ether compound are contained as the photo-polymerizable compound.
13. The actinic radiation curable ink-jet recording magenta ink described in above 8,
   wherein viscosity at 25 °C is 7 to 50 mPa·s.
14. An image forming method for printing an image comprising the steps of:
   (a) ejecting the actinic radiation curable ink-jet recording magenta ink described in above 8 from an ink-jet recording head onto a recording medium, and
      2) irradiating actinic radiation onto the ejected ink to cure an image on the recording medium,
      wherein a volume of an ink droplet ejected from each of nozzles of an ink-jet recording head is 2 to 15 pl.
15. An ink-jet recording apparatus for printing an image on a recording medium by ejecting the actinic radiation curable ink-jet recording magenta ink described in above 8,
   wherein the actinic radiation curable ink is ejected after the actinic radiation curable ink and the ink-jet recording head are heated to a temperature of 50 to 100 °C.
16. An actinic radiation curable magenta printing ink comprising a quinacridone series pigment, a dispersing agent, a photo-polymerizable compound, and a Photo-polymerization initiator,
   wherein a surface of a coated layer with the magenta printing ink on a porous medium exhibits a 60°-glossiness defined in JIS K 5600 in the range of 95 to 140,
   provided that the coated layer is formed by coating the magenta printing ink with a bar coater on the porous medium having a void ratio of 50 to 70% and a 60°-glossiness defined in JIS K 5600 of 30 or more, and then standing still for 30 minutes.
17. The actinic radiation curable magenta printing ink described in above 16,
   wherein the quinacridone series pigment has an average particle diameter of from 0.090 to 0.200 µm.
18. The actinic radiation curable magenta printing ink described in above 16,
   wherein an amine value is larger than an acid value in the quinacridone series pigment, and an acid value is larger than an amine value in the dispersing agent.
19. The actinic radiation curable magenta printing ink described in above 16,
   wherein a compound having an oxirane group is contained as the photo-polymerizable compound.
20. The actinic radiation curable magenta printing ink described in above 16,
wherein 20 to 95% by weight of a compound having an oxetane ring, 5 to 80% by weight of a compound having an oxirane group, and 0 to 40% by weight of a vinyl ether compound are contained as the photo-polymerizable compound.
As described in the above technical background, a method for obtaining a stable pigment dispersion by using a polymer dispersing agent having a basic adsorption group in usual actinic radiation curable type ink has been widely known; particularly, foregoing JP-A 2003-321629 discloses a magenta ink using quinacridone series pigment superior in the ejection stability and storage capability. However, any magenta ink having sufficient ejection stability cannot be obtained by only applying the above disclosed technologies.
It is found by the inventors that the actinic radiation curable magenta ink using the quinacridone series pigment superior in both of the ejection stability and the storage stability can be obtained by preparing the ink so that the 60°-glossiness defined in JIS K 5600 of the surface of the coated layer formed by coating the ink composition by a bar coater onto a porous media having a void ratio of from 50 to 70% and a 60°-glossiness defined in JIS K 5600 of not less than 30 and then stood for 30 minutes is within the range of from 95 to 140.
It is found that the above constitution can be attained by using the quinacridone series pigment having the amine value larger than the acid value and a dispersing agent having the acid value larger than the amine value. An average diameter of the quinacridone series pigment of not less than 0.090 µm is preferable from the viewpoint of the storage stability. It is also found that the ejection stability and the storage stability are enhanced in a cationic photo-polymerizable ink using a photo-acid-generating agent as the photo-polymerization initiator and an epoxy compound and/or an oxetane compound as the photo-polymerizable compound.
Furthermore, such the effects are particularly enhanced when the amount of the ink droplet ejected from the each of the nozzle of the recording head is as small as 2 to 15 p1 for forming a high definition image.

At the viewpoint of storage stability of the ink, the above ink composition is also effective for the printing ink, particularly for magenta ink to be used for gravure printing or flexographic printing.

### EFFECTS OF THE INVENTION

The actinic radiation curable magenta ink composition superior in the storage stability, the actinic radiation curable magenta ink for ink-jet recording superior in the ejection stability and the storage stability and the actinic radiation curable magenta ink for printing work can be provided by the invention.

### THE BEST EMBODIMENT FOR EMBODYING THE INVENTION

The actinic radiation curable magenta ink composition according to the invention has a 60°-glossiness defined in JIS K 5600 of 95 to 140 when the ink composition is coated by a bar coater on the porous medium having a 60°-glossiness defined in JIS K 5600 of not less than 30 and a void ratio of 50 to 70% and stood for 30 minutes.

In the actinic radiation curable type ink composition using the quinacridone, one showing a glossiness of less than 95 is insufficient in the ejection stability when it is applied as the ink-jet ink, and one showing a glossiness of larger than 140 causes the problem of storage stability. The particle diameter of the quinacridone pigment to be used in the magenta ink is preferably not less than 0.090 µm from the viewpoint of dispersion stability and not more than 0.2 µm from the viewpoint of the ejection stability for the use as the ink-jet ink.
The glossiness in the invention is a value of 60°- glossiness of a sample prepared by coating the ink composition by the bar coater on an ink-jet recording medium having a void ratio of from 50 to 70% and a 60°-glossiness defined in JIS K 5600 of not less than 30 and standing for 30 minutes at room temperature. The glossiness is measured by a handy gloss meter ID-310, manufactured by Horiba, Ltd.

In this invention, Bar Coater No. 6 (the number indicates regulated layer thickness) manufactured by Dai-ichi Rika Co., Ltd., is used. The use of a bar coater for making a thinner layer is not preferable because the pigment in the ink cannot cover the surface of medium. As the recording medium having the above properties, ink-jet Recording paper QP Paper Series produced by Konica Minolta Photoimaging, Inc., can be used.

The average particle diameter is the volume average particle diameter measured by Zetasizer Nano Series, manufactured by Malvern Instruments Ltd. The glossiness and the average particle diameter can be suitably controlled by selecting the kind of pigment, the kind of dispersing agent and the dispersing condition.

As the quinacridone series pigment to be used in the invention, known ones can be applied. For example, a dimetylquinacridone series pigment such as C.I. Pigment Red 122, a dichloroquinacridone series pigment such as C.I. Pigment Red 202 and 209, an unsubstituted quinacridone series pigment such as C.I. Pigment Violet 19 and a mixture and solid solution composed of two or more kinds of such the pigment are available. The quinacridone series pigment is preferably used in an amount of from 1.0 to 10% by weight of the whole amount of the ink.

The pigment may be subjected to carious known surface treatment or fining treatment. For instance, an ink having preferable ejection stability and storage stability can be obtained by using the pigment treated so as to make larger the amine value than the acid value together with the dispersing agent having the acid value larger than the acid value.

As the preferable dispersing agent, one having both of the acid value and the amine value is preferably used, in which the amine value is larger than the acid value and the difference of them is not less than 1 mg KOH/g and less than 30 mg KOH/g. When the difference is less than 1 mg KOH/g, the effect cannot be obtained and when the difference is 30 mg KOH/g or more, anxiety of curing of the ink by thermal reaction is caused. As the dispersing agent, one with low molecular weight and one with high molecular weight also can be used. Concrete examples of the dispersing agent include Ajisper PB824 and PB 822, each produced by Ajinomoto Fine-Techno Co., Inc., Hinoact KF-1300M, KF-1700 and T-6000, produced by Kawaken Fine Chemicals Co., Ltd., though the dispersing agent is not limited to the above.

The acid value and the amine value in the invention can be determined by potentiometric titration. For example, that can be measured by the method described in Journal of Japan Society of Color Material 61, [12], p.p. 692 to 698, 1988.
In the invention, the determination is carried out in the following manner.

### (Measurement of amine value of dispersing agent)

The dispersing agent is dissolved in methyl-i-butyl ketone (being MIBK) and subjected to potentiometric titration using a 0.01 moles/L perchloric acid MIBK solution and the value in terms of KOH mg/g is defined as the amine value. An automatic titration apparatus COM-1500 manufactured by Hiranuma Sangyo Co., Ltd., is used for the potentiometric titration.

### [Measurement of acid value of dispersing agent]

The dispersing agent is dissolved in MIBK and subjected to potentiometric titration using a 0.01 moles/L potassium methoxide MIBK and methanol (1:4) solution and the value in terms of KOH mg/g is defined as the acid value. An automatic titration apparatus COM-1500 is used for the potentiometric titration.

### (Measurement of amine value of pigment)

To the pigment, a 0.01 mole/L perchloric acid MIBK solution and dispersed by an ultrasonic dispersing machine and centrifugally separated to obtain supernatant. The supernatant is subjected to potentiometric titration using a 0.01 moles/L potassium methoxide MIBK/methanol (4:1) solution. Decreasing amount of perchloric acid caused by the pigment in terms of KOH mg/g is defined as the amine value. The automatic titration apparatus COM-1500 is used for the potentiometric titration.

### (Measurement of acid value of pigment)

To the pigment, a 0.01 mole/L tetrabutylammonium hydroxide MIBK solution and dispersed by the ultrasonic dispersing machine and centrifugally separated to obtain supernatant. The supernatant is subjected to potentiometric titration using a 0.01 moles/L perchloric acid MIBK. Decreasing amount of tetrabutylammonium hydroxide caused by the pigment in terms of KOH mg/g is defined as the acid value. The automatic titration apparatus COM-1500 is used for the potentiometric titration.

When plural kinds of pigment or dispersing agent are used, the average weight can be applied.

For dispersing the pigment, for example, a ball mill, a sand mill, an attriter, a roller mill, an agitator, a Henschel mixer, a colloid mill, an ultrasonic homogenizer, a pearl mill, a wet type jet mill and a paint shaker can be applied. A synergist corresponding to each pigment can be used as a dispersion assisting agent according to necessity.

The dispersing agent and the dispersion assisting agent are preferably added in an amount of from 1 to 50 parts by weight to 100 parts by weight of the pigment. Although a solvent or a polymerizable compound can be used as the dispersing medium, the active curable type ink of the invention is preferably containing no solvent because the ink is cured by reaction just after the landing of the ink. When the solvent is remains in the cured image, problems of lowering in the solvent resistivity of the image and VOC (volatile organic compound) are posed. Therefore, the polymerizable compounds not the solvent are preferable, and among them a monomer having the lowest viscosity is preferably selected for dispersion suitability.

In the invention, it is preferable that the ink composition contains at least one compound having an oxirane group for improving the curing property and the ejection stability.

As the cationic photo-polymerizable monomer, various kinds of known cationic monomer can be used. Examples of the monomer include epoxy compounds, vinyl ether compounds and oxetane compounds exemplified in JP-A Nos. 6-9714, 2001-31892, 2001-40068, 2001-55507, 2001-310938, 2001-310937 and 2001-220526.

The epoxy compounds include the following aromatic epoxide compounds, alicyclic epoxide compounds and aliphatic epoxide compounds.

Preferable epoxide compound is a di- or poly-glycidyl ether produced by reaction of a polyphenol or an alkylene oxide adduct thereof with epichlorohydrine such as a di- or poly-glycidyl ether of bisphenol A or an alkylene oxide adduct thereof, a di- or poly-glycidyl ether of hydrated bisphenol A or an alkylene oxide adduct thereof and a novolac type epoxy resin. As the alkylene oxide, ethylene oxide and propylene oxide are applicable.

As the alicyclic epoxide, a compound containing cyclohexane oxide or cyclopentene oxide is preferable, this can be produced by epoxidizing a compound having a cycloalkane ring such as cyclohexane or cyclopentene by a suitable oxidant such as hydrogen peroxide and a peracid.

As a preferable aliphatic epoxide, a di- or poly-glycidyl ether of an aliphatic polyalcohol or an alkylene oxide adduct thereof is cited. Typical examples of that includes diglycidyl ether of ethylene glycol, a diglycidyl ether of an alkylene glycol such as diglycidyl ether of propylene glycol and diglycidyl ether of 1,6-hexane-diol, a polyglycidyl ether of a polyalcohol such as polyethylene glycol or an alkylene oxide adduct thereof, and a diglycidyl ether of a polyalkylene glycol such as a diglycidyl ether of polypropylene glycol or an alkylene oxide adduct thereof. As the alkylene oxide, ethylene oxide and propylene oxide are applicable.

Among these epoxides, the aromatic epoxide and the alicyclic epoxide are preferable considering rapid curing property and the alicyclic epoxide is particularly preferred. In the invention, the above epoxide may be used singly or two or more kinds of them in suitable combination.

In the invention, the epoxy compound having an oxirane group is preferably used in combination with an epoxidized aliphatic acid ester or an epoxidized aliphatic acid glyceride form the viewpoint of safeness as to AMES (mutagenesis) and sensitization. As the epoxidized aliphatic acid ester and the epoxidized aliphatic acid glyceride, compounds of an aliphatic acid ester or an aliphatic acid glyceride each introduced with an epoxy group can be used without any limitation.

As the epoxidized aliphatic acid ester is a compound prepared by epoxidizing oleic acid ester and methyl epoxystearate, butyl epoxystearate and octyl epoxystearate are usable. The epoxidized aliphatic acid glyceride is a compound prepared by epoxidizing oil such as soy bean oil and castor oil, and epoxidized soy bean oil and epoxidized linseed oil are usable.

In this invention, it is preferable for further improving the ejection stability that 20 - 95% by weight of a compound containing an oxetane ring, 5 - 80% by weight of a compound containing an oxirane group, and 0 - 40% by weight of a vinyl ether compound (based on the total amount 100% of the photo-polymerizable compounds) are contained.

As the oxetane compound, any known oxetane compounds such as those described in JP-A Nos. 2001-220526 and 2001-310937 are usable.

Examples of the vinyl ether compound usable in the invention include a di- or tri-vinyl ether compound such as ethylene glycol divinyl ether, diethylene glycol divinyl ether, triethylene glycol divinyl ether, propylene glycol divinyl ether, dipropylene glycol divinyl ether, buthanediol divinyl ether, hexanediol divinyl ether, cyclohexandimethanol divinyl ether and trimethylolpropane trivinyl ether, and a monovinyl ether compound such as ethyl vinyl ether, butyl vinyl ether, i-butyl vinyl ether, octadecyl vinyl ether, cyclohexyl vinyl ether, hydroxybutyl vinyl ether, 2-ethylhexyl vinyl ether, cyclohexanrdimethanol monovinyl ether, propyl vinyl ether, i-propyl vinyl ether, diethylene glycol monovinyl ether, i-propenyl ether-o-propylenecarbonate, dodecyl vinyl ether, and diethylene glycol monovinyl ether. Among these vinyl ether compounds, the di- or tri-vinyl ether compounds are preferable considering the curing capability, contacing capability and the surface hardness and the divinyl ether compounds are particularly preferred.

In the invention, the above vinyl ether compounds may be used singly or two or more kinds of them in suitable combination.

In the invention, a radical polymerizable compound also can be used. As the radical polymerizable compound, known (meth)acrylate monomers and/or oligomers are entirely usable. Examples of such the monomer include a mono-functional monomer such as i-amyl acrylate, stearyl acrylate, lauryl acrylate, octyl acrylate, decyl acrylate, i-myristyl acrylate, i-stearyl acrylate, 2-ethylhexyl diglycol acrylate, 2-hydroxybutyl acrylate, 2-acrylohexyl hexahycrophthalate, butoxyethyl acrylate, ethoxydiethylene glycol acrylate, methoxdiethylene glycol acrylate, methoxpolyethylene glycol acrylate, methoxypropylene glycol acrylate, phenoxyethyl acrylate, tetrahydrofurfuryl acrylate, i-bornyl acrylate, 2-hydroxyethyl acrylate, 2-hydroxypropyl acrylate, 2-hydroxy-3-phenoxyphenoxypropyl acrylate, 2-acryloxyethyl succinate, 2-acryloxyethyl phthalate, 2-acryloxyethyl-2-hydroxyethyl phthalate, lactone-modified flexible acrylate and t-butylhexyl acrylate, a bi-functional monomer such as triethylene glycol diacrylate, tetraethylene glycol diacrylate, polyethylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethyloltricyclodecane diacrylate, diacrylate of EO (ethyleneoxy) adduct of bisphenol A, diacrylate of PO (propyleneoxy) adduct of bisphenol A, hydroxypivalic acid neopentyl glycol diacrylate and polytetramethylene glycol diacrylate, a tri- or more multi-functional monomer such as trimethylolpropane triacrylate, EO-modified trimethylolpropane triacrylate, pentaerythlitol triacrylate, pentaerythlitol tetracrylate, dipentaerythlitol hexacrylate, ditrimethylolpropane tetracrylate, glycerolpropoxy triacrylate, caprolactone-modified trimethylolpropane triacrylate, pentaerythlitolethoxy tetracrylate and caprolactum-modified dipentaerythlitol hexacrylate.

Known photo-acid-generating agents can be entirely used as the photo-polymerization initiator in the actinic radiation curable type ink of the invention. As the photo-acid-generating agent, for example, compounds utilized in a chemically amplifying type photoresist and cation photo-polymerization are applicable, cf. "Organic materials for photo imaging" p.p. 187 to 192, edited by Organic Electronics Material Kenkyu Kai, Bunshin Shuppan, 1993.

Examples of the compound suitable for the invention are described below.

Firstly, B(C₆F₅)₄⁻, PF₆⁻, AsF₆⁻, SbF₆ or CF₃SO₃⁻ salt of an aromatic onium compound such as diazonium, ammonium, iodonium, sulfonium and phosphonium can be cited. Concrete examples of the usable onium compound are listed below.

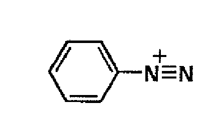

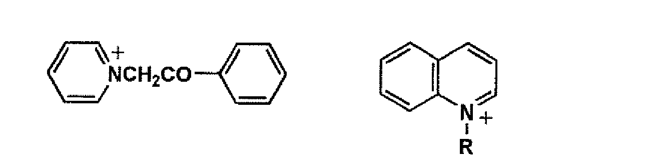

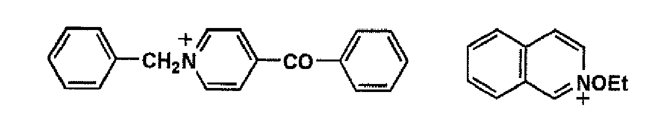

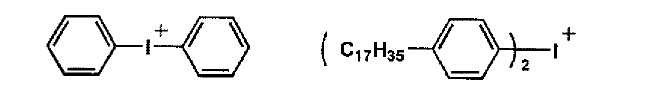

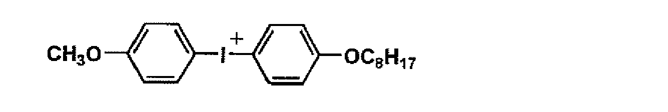

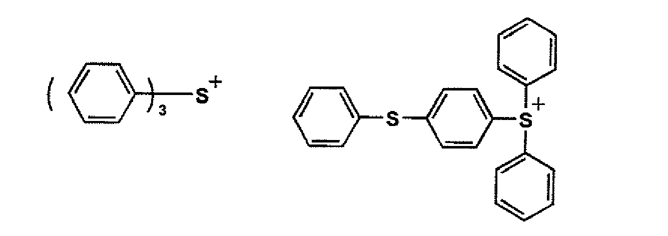

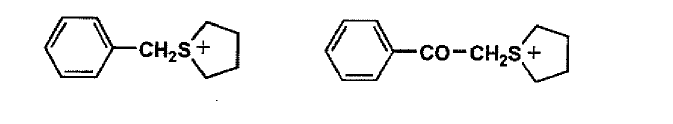

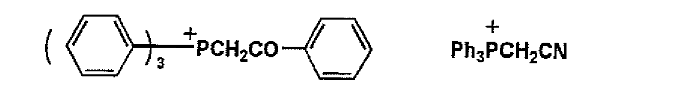

Secondarily, a sulfonated compound capable of generating a sulfonic acid can be cited; concrete examples thereof are listed below.

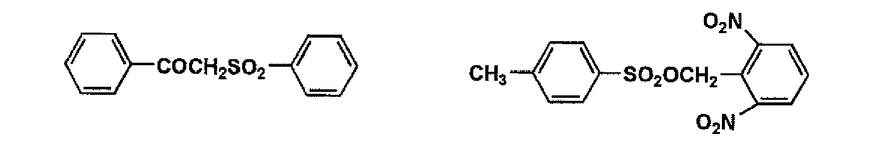

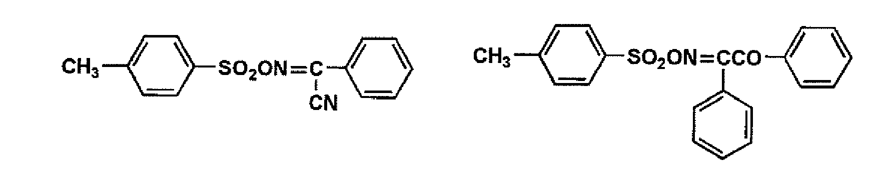

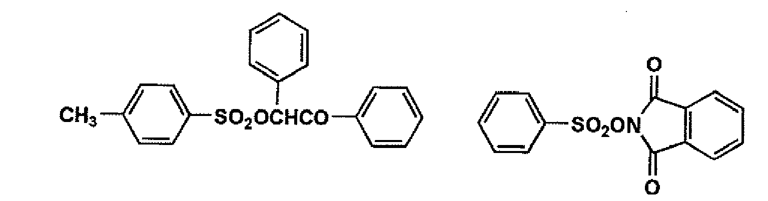

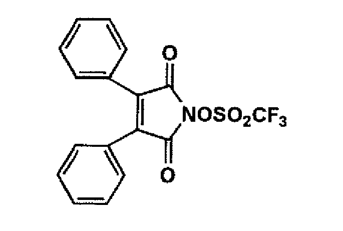

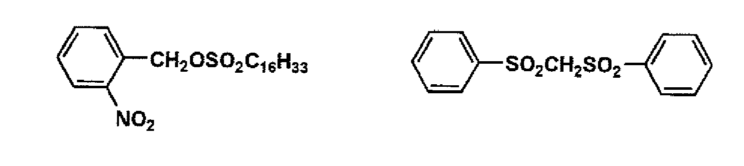

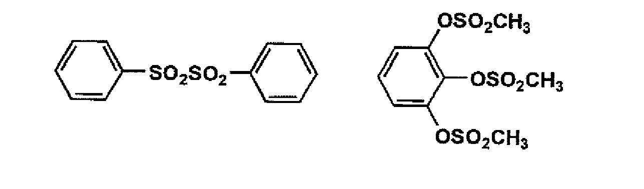

Thirdly, a halogen compound capable of generating a hydrogen halide can be also cited; concrete examples thereof are listed below.

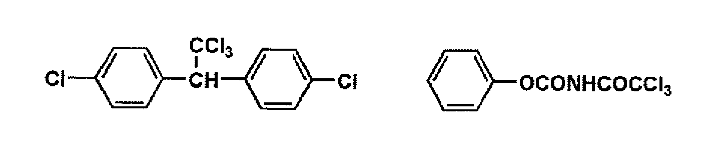

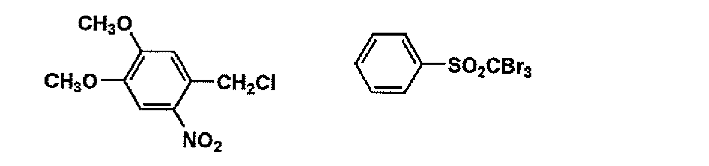

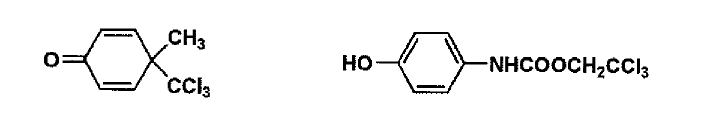

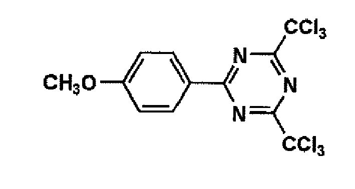

Forthly, an iron allene complex can be cited.

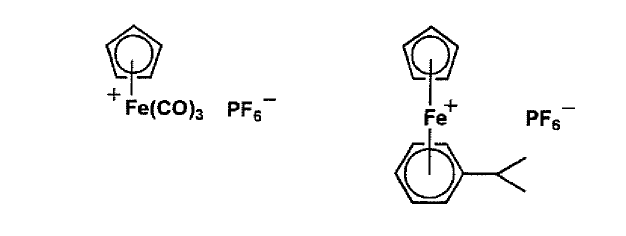

In the invention, a photo-radical-generating agent is also can be used as the photo-polymerization initiator, and known photo-radical-generating agents such as a aryl alkyl ketone, an oxime ketone, S-phenyl thiobenzoate, a titanocene, an aromatic ketone, a thioxantone, a benzyl quinine derivative and ketocumrine are usable. Among them, an acylsulfine oxide and an acylsulfonate are particularly suitable for internal curing of an ink image having a thickness of from 5 to 12 µm per color such as that formed by the ink-jet system because such the compounds show high sensitivity and the absorption thereof is lowered accompanied with the cleavage of the initiator. Concretely, bis(2,4,6-trimethylbenzoyl)-phenylphosfine oxide, bis (2,6-dimetoxybenzoyl)-2,4,4-trimethylpentylphosphine oxide are preferable. When safeness is considered, 1-hydroxycyclohexyl-phenyl ketone, 2-methyl-[4-(methylthio)-phenyl]-2-morpholinopropane-1-one, bis(2,6-dimethoxybenzoyl)-2,4,4-trimethylpnetylphosphine oxide, and 2-hydroxy-2-methyl-1-phenyl-propane-1-one (Drocure® 1173) are suitably selected.

The adding amount of the photo-polymerization initiator is from 1 to 6% and preferably from 2 to 5% by weight of the entire weight of the ink.

Viscosity of the ink of the invention is preferably from 7 to 50 mP·s at 25 °C; the ejection is stably performed without the influence of the curing condition (temperature and humidity) within such the range. The viscosity in the invention is a value of share rate 1000 (1/s) measured by a viscoelasticity measuring apparatus MCR 300 manufactured by Physica Co., Ltd.

The image forming method and the recording apparatus are described bellow.

A method is preferred as the image forming method of the invention, in which the ink of the invention is image wise ejected onto the recording material by the ink-jet recording system and cured by irradiation of an actinic radiation such as UV rays.

An ejection condition of the ink in which the ink is ejected while heating the recording head and the ink by a temperature of from 50 to 100 °C is preferred from the viewpoint of ejection stability. It is necessary to raise and constantly hold the temperature of the ink since the viscosity variation of the actinic radiation curable ink depending on the temperature variation is large and the variation in the viscosity directly influences to the droplet size and ejecting speed of the ink and causes degradation in the image quality. The controlling accuracy of the ink temperature is setting temperature ± 5 °C more preferably ± 2 °C, and further preferably ± 1 °C.

In the invention, the amount of the ink droplet ejected from each of the nozzles is preferably from 2 to 15 pl. For forming a high definition image, the droplet volume within such the range is necessary. However, the ejection stability becomes particularly severe when the ink is ejected into such the small droplet. According to the invention, the ejecting stability is improved and the high definition image can be stably formed even when the droplet as small as 2 to 15 ml is ejected.

### EXAMPLES

The invention is concretely described referring examples, but the invention is not limited to the examples.

### Example 1

### «Preparation of dispersion»

Dispersions A to E were prepared according to the followings.

### <Preparation of Dispersion A>

The following compounds were charged into a stainless steel beaker and dissolved by heating and stirring for 1 hour on a hot plate of 65°C.

| | |
|---|---|
| Solsperse 3200 (Dispersing agent produced by Avesia Co., Ltd., Acid value: 24.8 mg KOH/g, Amine value: 27.1 mg KOH/g) | 8 parts |
| Tetraethylene glycol diacrylate (Bi-function) | 72 parts |

The resultant solution was cooled by room temperature and 20 parts of the following Pigment 1 was added and the mixture was put into a glass bottle together with 200 g of zirconia beads of diameter of 1 mm and the bottle was closely stopped. After dispersing treatment for 6 hours by a paint shaker, the zirconia beads were removed from the liquid to obtain comparative Dispersion A.

Pigment 1: Pigment Violet 19 (Hostaperm Red E5B02 produced by Clariant Co., Ltd., Acid value: 3.7 KOH mg/g, Amine value: 4.2 mg KOH/g)

### <Preparation of Dispersion B>

The following compounds were charged into a stainless steel beaker and dissolved by heating and stirring for 1 hour on a hot plate of 65 °C.

| | |
|---|---|
| PB 824 (Dispersing agent produced by Ajinomoto Fine-Techno Co., Inc., Acid value: 32.5 mg KOH/g, Amine value: 10.1 mg KOH/g) | 8 parts |
| Tetraethylene glycol diacrylate (Bi-function) | 72 parts |

The resultant solution was cooled by room temperature and 20 parts of the following Pigment 2 was added and the mixture was put into a glass bottle together with 200 g of zirconia beads of diameter of 0.5 mm and the bottle was closely stopped. After dispersing treatment for 10 hours by a paint shaker, the zirconia beads were removed from the liquid to obtain inventive Dispersion B.

Pigment 2: Pigment Red 122 (PV Fast Pink E produced by Clariant Co., Ltd., Acid value: 1.7 KOH mg/g, Amine value: 3.0 mg KOH/g)

### <Preparation of Dispersion C>

The following compounds were charged into a stainless steel beaker and dissolved by heating and stirring for 1 hour on a hot plate of 65 °C.

| | |
|---|---|
| PB 822 (Dispersing agent produced by Ajinomoto Fine-Techno Co., Inc., Acid value: 18.5 mg KOH/g, Amine value: 15.9 mg KOH/g) | 9 parts |
| OXT 221 (Oxetane compound produced by Toa Gosei Co., Ltd.) | 72 parts |

The resultant solution was cooled by room temperature and 20 parts of the following Pigment 3 was added and the mixture was put into a glass bottle together with 200 g of zirconia beads of diameter of 0.3 mm and the bottle was closely stopped. After dispersing treatment for 12 hours by a paint shaker, the zirconia beads were removed from the liquid to obtain inventive Dispersion C.

Pigment 3: Pigment Violet 19 (PV Fast Red E5B produced by Clariant Co., Ltd., Acid value: 2.9 KOH mg/g, Amine value: 3.01 mg KOH/g)

### <Preparation of Dispersion D>

The following compounds were charged into a stainless steel beaker and dissolved by heating and stirring for 1 hour on a hot plate of 65 °C.

| | |
|---|---|
| T-6000 (Dispersing agent produced by Kawaken Fine Chemical Co., Lit., Acid value: 36.0 mg KOH/g, Amine value: 12.4 mg KOH/g) | 8 parts |
| OXT 221 (The foregoing oxetane compound | 72 parts |

The resultant solution was cooled by room temperature and 20 parts of the following Pigment 4 was added and the mixture was put into a glass bottle together with 200 g of zirconia beads of diameter of 1 mm and the bottle was closely stopped. After dispersing treatment for 14 hours by a paint shaker, the zirconia beads were removed from the liquid to obtain inventive Dispersion D.

Pigment 4: Pigment Violet 19 (Special ordered product controlled in the acid and amine values by Dainichi Seika Co., Ltd., Acid value: 6.2 KOH mg/g, Amine value: 10.4 mg KOH/g)

### <Preparation of Dispersion E>

The following compounds were charged into a stainless steel beaker and dissolved by heating and stirring for 1 hour on a hot plate of 65 °C.

| | |
|---|---|
| PB 822 (Dispersing agent produced by Ajinomoto Fine-Techno Co., Inc., Acid value: 18.5 mg KOH/g, Amine value: 15.9 mg KOH/g) | 9 parts |
| OXT 221 (The foregoing oxetane compound | 71 parts |

The resultant solution was cooled by room temperature and 20 parts of the following Pigment 5 was added and the mixture was put into a glass bottle together with 200 g of zirconia beads of diameter of 0.3 mm and the bottle was closely stopped. After dispersing treatment for 10 hours by a paint shaker, the zirconia beads were removed from the liquid to obtain inventive Dispersion E.

Pigment 5: Pigment Red 122 (Special ordered product controlled in the acid and amine values by Dainichi Seika Co., Ltd., Acid value: 6.1 KOH mg/g, Amine value: 8.9 mg KOH/g)

### <<Preparation of magenta ink>>

Magenta Inks 1 - 5 having the following composition were prepared using the above prepared dispersions, respectively, and filtered through a 3 µm Teflon® membrane produced by Advantec Co., Ltd. The average particle diameter, viscosity and glossiness of each of the inks were measured.
The average particle diameter was a volume average particle diameter measured by Zetasizer Nona Series manufactured by Malvern Instruments Ltd.
The viscosity was measured by MCR (Modular Compact Rheometer) 300 manufactured by Paar Physica Co., Ltd.
The glossiness was measured by preparing a sample by coating each of the inks on a ink-jet image forming media of QP paper having a void ratio of 60% and a 60°-glossiness of 31, produced by Konica Minolta Photoimaging, Inc., using a bar coater No. 6 (the number indicates the layer thickness) manufactured by Dai-ichi Rika Co., Ltd., and standing for 30 minutes. The 60°-glossiness of the layer of thus prepared sample was measured by a handy gloss meter IG-310 manufactured by Horiba, Ltd.
Beside each of the inks was closed in a glass bottle and stored for one week at 70 °C.

| (Magenta Ink 1) | |
|---|---|
| Dispersion A | 20.0 parts |
| Photo-polymerizable compound (lauryl acrylate: mono functional) | 19.9 parts |
| Photo-polymerizable compound (tetraethylene glycol diacrylate: bi-functional) | 25.0 parts |
| Photo-polymerizable compound (trimethylolpropane triacrylate: tri-functional) | 30.0 parts |
| Modified silicone oil (SDX-1843: produced by Asahi Denka Co., Ltd.) | 0.1 parts |
| Photo radical initiator (Irgacure 184: produced by Ciba Specialty Chemicals. | 2.5 parts |
| Photo radical initiator (Irgacure 819: produced by Ciba Specialty Chemicals.) | 2.5 parts |
| (Magenta Ink 2) | |
| Dispersion B | 17.5 parts |
| Photo-polymerizable compound (lauryl acrylate: mono functional) | 21.4 parts |
| Photo-polymerizable compound (tetraethylene glycol diacrylate: bi-functional) | 30.0 parts |
| Photo-polymerizable compound (caprolactum-modified dipentaerythlitol hexacrylate (hexafunctional) | 25.0 parts |
| Modified silicone oil (the foregoing SDX-1843) | 0.1 parts |
| Photo radical initiator (The foregoing Irgacure 184) | 3.0 parts |
| Photo radical initiator (Irgacure 904: produced by Ciba Specialty Chemicals.) | 3.0 parts |
| (Magenta Ink 3) | |
| Dispersion C | 20.0 parts |
| Photo-polymerizable compound (epoxidized linseed oil Vokoflex 9040: produced by Atofina S. A.) | 4.0 parts |
| Photo-polymerizable compound (alicyclic epoxy compound EP-1) | 26.4 parts |
| Photo-polymerizable compound (oxetane compound OXT-221: produced by Toa Gosei Co., Ltd.) | 30.0 parts |
| Photo-polymerizable compound (oxetane compound OXT0212: produced by Toa Gosei Co., Ltd.) | 7.0 parts |
| Basic compound (tri-i-propanolamine) | 0.1 parts |
| Modified silicone oil (KF-351: produced by Shin-Etsu Silicone Co., Ltd.) | 0.5 parts |
| Compatibilizer (glycol ether, Hisolve BDB: produced by Kogyo Co., Ltd.) | 7.0 parts |
| Photo-acid-generating agent (UV16992: produced by Daw Chemical Co., Ltd.) | 5.0 parts |
| (Magenta Ink 4) | |
| Dispersion D | 20.0 parts |
| Photo-polymerizable Compound (alicyclic epoxy compound, Celloxide 3000: produced by Daicel Co., Ltd.) | 26.9 parts |
| Photo-polymerizable compound (the foregoing oxetane compound OXT-221) | 40.0 parts |
| Photo-polymerizable compound (oxetane compound OXT-101: produced by Toa Gousei Co., Ltd.) | 10.0 parts |
| Basic compound (N,N-diethanolamine) | 0.1 parts |
| Photo-acid-generating agent (DST-102: produced by Midori Kagaku Co., Ltd.) | 3.0 parts |
| (Magenta Ink 5) | |
| Dispersion E | 17.5 parts |
| Photo-polymerizable compound (alicyclic epoxy compound EP-2) | 15.0 parts |
| Photo-polymerizable compound (the foregoing oxetane compound OXT-221) | 30.0 parts |
| Photo-polymerizable compound (the foregoing oxetane compound OXT-212) | 10.0 parts |
| Photo-polymerizable compound (butyl ester of epoxidized fatty acid E-4030: produced by Shin Nihon Rika Co., Ltd.) | 2.3 parts |
| Photo-polymerizable compound (alicyclic epoxy compound EP-1) | 15.0 parts |
| Basic compound (tri-i-propanolamine) | 0.1 parts |
| Modified silicone oil (XF42-334: produced by EG-Toshiba Silicone Co., Ltd.) 0.1 parts | |
| Compatibilizer (Anisole, Hichemic MB: produced by Toho Chemical Industry Co., Ltd.) | 5.0 parts |
| Photo-acid-generating agent (SP152: produced by Asahi Denka Co., Ltd.) | 5.0 parts |

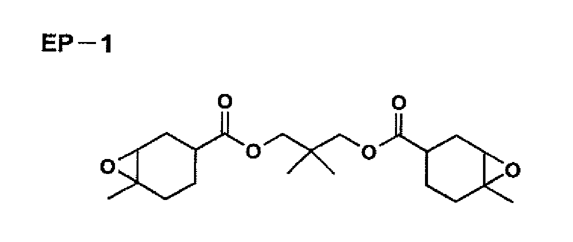

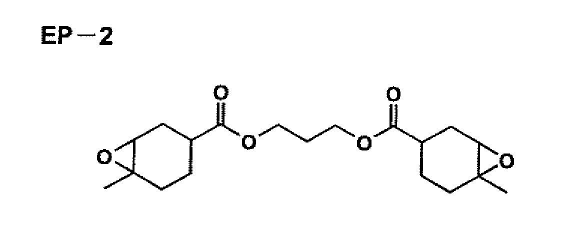

### <<Image formation and evaluation>>

### <Ink ejection>

Each of the above magenta inks was charged in an ink-jet recording apparatus having a piezo type head with 215 nozzles, and the ink was continuously ejected for 1 hour into droplet of 4 pl at a rate of 6 m/s at an interval of 1 mm from the nozzle face. The ink supplying system was constituted by an ink tank, a supplying pipe, a prepositional ink tank arranged just before the head, a pipe with a filter and a piezo head, and the portion of from the prepositional tank to the head was thermally isolated and heated by 50°C during the continuous ejection. The following properties were evaluated according to the above continuous ejection. The results are listed in Table 1.

### <Storage stability of ink: measurement of viscosity and particle diameter>

Viscosity and particle diameter of each of the inks were measured just after ink preparation and after storage at 70 °C for one week, as an indicator of the storage stability of the ink.

### <Evaluation of ejection stability>

The ink just after preparation and that stored at 70 °C for one week were each continuously ejected for 1 hour from the all nozzles and visually observed to judge that the ink was correctly ejected to a designated position. And the evaluation was carried out according to the following criteria.
A: The ink was ejected from the whole nozzles and aberration of the landing position was not observed.
B: The ink was ejected from the whole nozzles and aberration of the landing position was partially observed.
C: Nozzles not ejecting ink were observed.

**Table 1**

| Magenta Ink No. | Glossiness | Viscosity (mPa·s/25 °C) | | Average particle diameter (nm) | | Ejection property | | Remarks |
|---|---|---|---|---|---|---|---|---|
| | | Just preparation | After 1 week at 70 °C | Just Preparation | After 1 week at 70 °C | Just preparation | After 1 week at 70 °C | |
| 1 | 80 | 26 | 30 | 150 | 183 | B | C | Comp. |
| 2 | 97 | 25 | 29 | 140 | 161 | A | B | Inv. |
| 3 | 97 | 34 | 37 | 145 | 156 | A | A | Inv. |
| 4 | 105 | 22 | 24 | 131 | 148 | A | A | Inv. |
| 5 | 110 | 35 | 37 | 111 | 123 | A | A | Inv. |

Comp.: Comparative example Inv.: This invention

It is cleared in Table 1 that the constitution of the invention is superior in both storage stability and ejection stability of the ink.

### Example 2

Flexographic Printing Inks 6 to 10 were prepared using each of the pigment dispersions described in Example 1, and the pigment concentration (adding amount of the dispersion) was controlled as follows.

| (Flexographic Printing Ink 6) | |
|---|---|
| Dispersion A | 40.0 pats |
| Photo-polymerizable compound (lauryl acrylate: monofunctional) | 9.9 parts |
| Photo-polymerizable compound (tetraethylene glycol diacrylate: bi-functional) | 20.0 parts |
| Photo-polymerizable compound (trimethylolpropane triacrylate: tri-functional) | 25.0 parts |
| Modified silicone oil (SDX-1843: produced by Asahi Denka Co., Ltd.) | 0.1 parts |
| Photo-radical initiator (Irgacure 184: produced by Ciba Specialty Chemicals.) | 2.5 parts |
| Photo-radical initiator (Irgacure 819: produced by Ciba Specialty Chemicals.) | 2.5 parts |
| (Flexographic Printing Ink 7) | |
| Dispersion B | 35.0 pats |
| Photo-polymerizable compound (lauryl acrylate: monofunctional) | 11.4 parts |
| Photo-polymerizable compound (tetraethylene glycol diacrylate: bi-functional) | 25.0 parts |
| Photo-polymerizable compound (caprolactum-modified dipentaerythlitol hexacrylate: hexa-functional) | 22.5 parts |
| Modified silicone oil (the foregoing SDX-1843) | 0.1 parts |
| Photo-radical initiator (the foregoing Irgacure 184) | 3.0 parts |
| Photo-radical initiator (Irgacure 907: produced by Ciba Specialty Chemicals.) | 3.0 parts |
| (Flexographic Printing Ink 8) | |
| Dispersion C | 45.0 parts |
| Photo-polymerizable compound (epoxidized linseed oil, Vikoflex 9040: produced by Atofina S. A.) | 4.0 parts |
| Photo-polymerizable compound (alicyclic epoxy compound EP-1) | 22.4 parts |
| Photo-polymerizable compound (oxetane compound OXT-221: produced by Toa Gosei Co., Ltd.) | 15.0 parts |
| Photo-polymerizable compound (oxetane compound OXT-212: produced by Toa Gosei Co., Ltd.) | 7.0 parts |
| Basic compound (tri-i-propanolamine) | 0.1 parts |
| Modified silicone oil (KF-351: produced by Shin-Etsu Silicone Co., Ltd.) | 0.5 parts |
| Photo-acid-generating agent (UV 16992: produced by Daw Chemical Co., Ltd.) | 5.0 parts |
| (Flexographic Printing ink 9) | |
| Dispersion D | 45.0 parts |
| Photo-polymerizable compound (alicyclic epoxy compound Celoxide 3000: Daicel Co., Ltd.) | 26.9 parts |
| Photo-polymerizable compound (the foregoing oxetane compound OXT-221) | 15.0 parts |
| Photo-polymerizable compound (oxetane compound OXT-101: produced by Toa Gosei Co., Ltd.) | 10.0 parts |
| Basic compound (N,N-diethanolamine) | 0.1 parts |
| Photo-acid-generating agent (DST-102: produced by Midori Kagaku Co., Ltd.) | 3.0 parts |
| (Flexographic Printing Ink 10) | |
| Dispersion E | 35.0 parts |
| Photo-polymerizable compound (alicyclic epoxy compound EP-2) | 15.0 parts |
| Photo-polymerizable compound (foregoing oxetane compound OXT-221) | 14.8 parts |
| Photo-polymerizable compound (foregoing oxetane compound OXT-212) | 10.0 parts |
| Photo-polymerizable compound (alicyclic epoxy compound: EP-1) | 15.0 parts |
| Basic compound (tri-i-propanolamine) | 0.1 parts |
| Modified silicone oil (XF 42-334: produced by GE-Toshiba Silicone Co., Ltd.) | 0.1 parts |
| Compatibilizing agent (Anisole, Hichemic MB: produced by Toho Chemical Industry Co., Ltd.) | 5.0 parts |
| Photo-acid-generating agent (SP152: produced by Asahi Denka Co., Ltd.) | 5.0 parts |

The storage stability of each of the above prepared flexographic printing inks was evaluated in the same manner as in Example 1. Moreover, 4-point characters were printed by a center drum type flexographic printing machine on the whole space of 1,000 m of A2 size paper using each of the Flexographic Printing Inks 6 - 10 after storing for one week at 70 °C. The amount of the ink was controlled by a ceramic anilox roller having 600 engraving line per 2.54 cm (being 1 inch) and a depth of 10 µm and a doctor blade. And then the quality of the printed characters after 1,000 m of printing was evaluated according to the following procedure.

### (Evaluation of quality of printed character)

Four-point size and Ming-type characters were printed and rough edges of the printed characters were visually evaluated by enlarging using a loupe and ranked based on the following criteria.

A: Rough edge was not observed.
B: Rough edges were slightly observed.
C: Rough edges were observed, but the character could be discriminated and was at lowest level acceptable for practical use.
D: The characters were considerably roughened and patchy, and unacceptable for practical use.
Thus obtained results are listed in Table 2.

**Table 2**

| No. of Flexographic Printing Ink | Glossiness | Viscosity (mPa·s/25 °C) | | Average particle diameter (nm) | | Character quality | Remarks |
|---|---|---|---|---|---|---|---|
| | | Just after preparation | After 1 week at 70 °C | Just preparation | After 1 week at 70 °C | After 1,000 m printing | |
| 6 | 78 | 98 | 120 | 153 | 220 | D | Comp. |
| 7 | 97 | 76 | 92 | 145 | 170 | B | Inv. |
| 8 | 98 | 120 | 133 | 149 | 160 | A | Inv. |
| 9 | 104 | 80 | 90 | 135 | 152 | A | Inv. |
| 10 | 110 | 110 | 115 | 112 | 130 | B | Inv. |

As is clear from the results in Table 2, the flexographic printing inks having the constitution of the invention is superior in the character quality and the storage stability.

### PROBABILITY OF INDUSTRIAL APPLICATION

The actinic radiation curable magenta ink composition is characterized in that the magenta ink composition contains a quinacridone series pigment, a dispersing agent, a Photo-polymerizable compound and a photo-polymerization initiator,
wherein a 60°-glossiness defined in JIS K 5600 of the coated layer surface is within the range of from 95 to 140 when the ink composition is coated by a bar coater onto a porous media having a void ratio of from 50 to 70% and a 60°-glossiness of not less than 30 and then standing still for 30 minutes. The actinic radiation curable magenta ink composition superior in the storage stability by the characteristics and the composition can be utilized for the ink-jet magenta ink and a printing magenta ink.

## Claims

1. An actinic radiation curable magenta ink composition comprising a quinacridone series pigment, a dispersing agent, a photo-polymerizable compound and a photo-polymerization initiator,
wherein a surface of a coated layer with the magenta ink composition on a porous medium exhibits a 60°-glossiness defined in JIS K 5600 in the range of 95 to 140,
provided that the coated layer is formed by coating the magenta ink composition with a bar coater on the porous medium having a void ratio of 50 to 70% and a 60°-glossiness of 30 or more, and then standing still for 30 minutes.

2. The actinic radiation curable magenta ink composition described in claim 1,
wherein the quinacridone series pigment has an average particle diameter of 0.090 to 0.200 µm.

3. The actinic radiation curable magenta ink composition described in claim 1,
wherein an amine value is larger than an acid value in the quinacridone series pigment, and further an acid value is larger than an amine value in the dispersing agent.

4. The actinic radiation curable magenta ink composition described in claim 1,
wherein a compound having an oxirane group is contained as the photo-polymerizable compound.

5. The actinic radiation curable magenta ink composition described in claim 1,
wherein 20 to 95% by weight of a compound having an oxetane ring, 5 to 80% by weight of a compound having an oxirane group, and 0 to 40% by weight of a vinyl ether compound are contained as the photo-polymerizable compound.

6. The actinic radiation curable magenta ink composition described in claim 1,
wherein the actinic radiation curable magenta ink composition is used as an ink-jet ink.

7. The actinic radiation curable magenta ink composition described in claim 1,
wherein the actinic radiation curable magenta ink composition is used as a flexographic printing ink.

8. An actinic radiation curable ink-jet recording magenta ink comprising a quinacridone series pigment, a dispersing agent, a photo-polymerizable compound, and a photo-polymerization initiator,
wherein a surface of a coated layer with the magenta ink on a porous medium exhibits a 60°-glossiness defined in JIS K 5600 in the range of 95 to 140,
provided that the coated layer is formed by coating the magenta ink with a bar coater on the porous medium having a void ratio of 50 to 70% and a 60°-glossiness defined in JIS K 5600 of 30 or more, and then standing still for 30 minutes.

9. The actinic radiation curable ink-jet recording magenta ink described in claim 8,
wherein the quinacridone series pigment has an average particle diameter of 0.090 to 0.200 µm.

10. The actinic radiation curable ink-jet recording magenta ink described in claim 8,
wherein an amine value is larger than an acid value in the quinacridone series pigment, and an acid value is larger than an amine value in the dispersing agent.

11. The actinic radiation curable ink-jet recording magenta ink described in claim 8,
wherein a compound having an oxirane group is contained as the photo-polymerizable compound.

12. The actinic radiation curable ink-jet recording magenta ink described in claim 8,
wherein 20 to 95% by weight of a compound having an oxetane ring, 5 to 80% by weight of a compound having an oxirane group, and 0 to 40% by weight of a vinyl ether compound are contained as the photo-polymerizable compound.

13. The actinic radiation curable ink-jet recording magenta ink described in claim 8,
wherein viscosity at 25 °C is 7 to 50 mPa·s.

14. An image forming method for printing an image comprising the steps of:
(a) ejecting the actinic radiation curable ink-jet recording magenta ink described in claim 8 from an ink-jet recording head onto a recording medium, and
2) irradiating actinic radiation onto the ejected ink to cure an image on the recording medium,
wherein a volume of an ink droplet ejected from each of nozzles of an ink-jet recording head is 2 to 15 pl.

15. An ink-jet recording apparatus for printing an image on a recording medium by ejecting the actinic radiation curable ink-jet recording magenta ink described in claim 8,
wherein the actinic radiation curable ink is ejected after the actinic radiation curable ink and the ink-jet recording head are heated to a temperature of 50 to 100 °C.

16. An actinic radiation curable magenta printing ink comprising a quinacridone series pigment, a dispersing agent, a photo-polymerizable compound, and a Photo-polymerization initiator,
wherein a surface of a coated layer with the magenta printing ink on a porous medium exhibits a 60°-glossiness defined in JIS K 5600 in the range of 95 to 140,
provided that the coated layer is formed by coating the magenta printing ink with a bar coater on the porous medium having a void ratio of 50 to 70% and a 60°-glossiness defined in JIS K 5600 of 30 or more, and then standing still for 30 minutes.

17. The actinic radiation curable magenta printing ink described in claim 16,
wherein the quinacridone series pigment has an average particle diameter of from 0.090 to 0.200 µm.

18. The actinic radiation curable magenta printing ink described in claim 16,
wherein an amine value is larger than an acid value in the quinacridone series pigment, and an acid value is larger than an amine value in the dispersing agent.

19. The actinic radiation curable magenta printing ink described in claim 16,
wherein a compound having an oxirane group is contained as the photo-polymerizable compound.

20. The actinic radiation curable magenta printing ink described in claim 16,
wherein 20 to 95% by weight of a compound having an oxetane ring, 5 to 80% by weight of a compound having an oxirane group, and 0 to 40% by weight of a vinyl ether compound are contained as the photo-polymerizable compound.
